# EUROPEAN PATENT APPLICATION

(11) **EP 4 685 937 A1**
(43) Date of publication of application: **28.01.2026**
(21) Application number: 25150730.7
(22) Date of filing: 08.01.2025
(51) Int. Cl.: H01M 50/103, H01M 50/15, H01M 50/176, H01M 50/184, H01M 50/186, H01M 50/474, H01M 50/477, H01M 50/528, H01M 50/54, H01M 50/55, H01M 50/553, H01M 50/566

(54) **SECONDARY BATTERY AND BATTERY PACK INCLUDING THE SAME**

(30) Priority: 23.07.2024 KR 20240096933
(71) Applicant: SAMSUNG SDI CO., LTD., Yongin-si, Gyeonggi-do 17084 (KR)
(72) Inventor: Bae, Kwang Soo, 16678 Suwon-si, Gyeonggi-do (KR)
(74) Representative: Gulde & Partner

(57) **Abstract**

The present disclosure relates to a secondary battery and a battery pack including the same, and a secondary battery in which a connection member is firmly welded to a terminal, and a battery pack including the same, are provided. A secondary battery includes a case having an opening, an electrode assembly accommodated inside the case, an electrode tab connected to the electrode assembly, a connection member electrically connected to the electrode tab, and a cap assembly including a cap plate that closes the opening, a terminal coupled to the cap plate, and a connection member towing part configured to pull the connection member such that the connection member comes into contact with the terminal.

## Description

### BACKGROUND

### 1. Field

Aspects of embodiments of the present disclosure relate to a secondary battery and a battery pack including the same.

### 2. Discussion of Related Art

Generally, with the recent rapid spread of electronic devices using batteries, such as mobile phones, laptop computers, and electric vehicles, the demand for secondary batteries having high energy density and high capacity has been rapidly increasing. Accordingly, research and development for improving performance of lithium secondary batteries is being actively conducted.

A lithium secondary battery is a battery including a positive electrode and a negative electrode, which include active materials capable of intercalating and deintercalating lithium ions, and an electrolyte, and produces electrical energy through an oxidation reaction and a reduction reaction when the lithium ions are intercalated into and deintercalated from the positive electrode and the negative electrode.

The aforementioned information disclosed in this background section is provided for enhancement of understanding of the background technology of the present disclosure, and, therefore, may contain information that does not constitute the related art.

### SUMMARY

According to an aspect of embodiments of the present invention, a secondary battery in which a connection member is firmly welded to a terminal, and a battery pack including the same, are provided.

However, technical aspects and objectives to be achieved by the present disclosure are not limited to the above-described aspects and objectives, and other aspects and objectives, which are not described above, will be clearly understood by those skilled in the art through the following description of the disclosure.

According to one or more embodiments of the present invention, a secondary battery includes a case having an opening, an electrode assembly accommodated inside the case, an electrode tab connected to the electrode assembly, a connection member electrically connected to the electrode tab, and a cap assembly including a cap plate that closes the opening, a terminal coupled to the cap plate, and a connection member towing part configured to pull the connection member such that the connection member comes into contact with the terminal.

The connection member may include a current collector electrically coupled to the terminal, and a current collecting plate electrically coupled to the current collector, and the connection member towing part may include a current collector joining part hook configured to pull the current collector joining part toward the terminal.

The current collecting plate may include a current collector joining part joined to the current collector and an electrode tab joining part connected to the current collector joining part and joined to the electrode tab, and the connection member towing part may be configured to pull the current collector joining part toward the terminal.

The current collector joining part and the current collector may be in surface contact with each other, and the current collector joining part hook may be configured to pull the current collector joining part while in contact with an outer peripheral portion of the current collector joining part not overlapping the current collector.

The cap assembly may further include an insulation plate between the cap plate and the electrode assembly, coupled to the cap plate, and including an insulation material, and the current collector joining part hook may be connected to the insulation plate.

The current collector joining part hook may include a stopper surface that blocks the current collector joining part to prevent the current collector joining part from moving away from the terminal, and an inclined surface inclined with respect to the stopper surface.

The stopper surface and the inclined surface may be located between the current collector joining part and the electrode assembly.

The current collecting plate may include a current collector joining part joined to the current collector, and an electrode tab joining part connected to the current collector joining part and joined to the electrode tab, and the connection member towing part may include an electrode tab joining part hook configured to pull the electrode tab joining part toward the terminal.

The cap assembly may further include an insulation plate between the cap plate and the electrode assembly, coupled to the cap plate, and including an insulation material, and the electrode tab joining part hook may be connected to the insulation plate.

The electrode tab joining part may be provided as a pair of electrode tab joining parts, the pair of electrode tab joining parts protrude from the current collector joining part in opposite directions, the electrode tab joining part hook may be provided as a plurality of electrode tab joining part hooks, and at least some of the plurality of electrode tab joining part hooks may be configured to pull ends of the pair of electrode tab joining parts in a longitudinal direction toward the terminal.

The connection member towing part may include a current collecting plate through-hook configured to pull the current collecting plate toward the terminal while passing through and in contact with the current collecting plate.

The cap assembly may further include an insulation plate between the cap plate and the electrode assembly, coupled to the cap plate, and including an insulation material, the current collecting plate may include a current collector joining part joined to the current collector, and an electrode tab joining part connected to the current collector joining part and joined to the electrode tab, and the current collecting plate through-hook may be connected to the insulation plate and pass through the electrode tab joining part.

The current collector may be welded to the current collecting plate and the terminal, and the current collector may include a current collector body welded to the current collecting plate, and a current collector boss welded to the terminal and protruding from the current collector body toward the terminal.

The terminal may be provided as a pair of terminals, and the pair of terminals may be coupled to opposite ends of the cap plate in a longitudinal direction.

According to one or more embodiments of the present invention, a battery pack includes a housing, and a plurality of secondary batteries arranged inside the housing, wherein each of the secondary batteries includes a case having an opening, an electrode assembly accommodated inside the case, an electrode tab connected to the electrode assembly, a connection member electrically connected to the electrode tab, and a cap assembly including a cap plate that closes the opening, a terminal coupled to the cap plate, and a connection member towing part configured to pull the connection member such that the connection member comes into contact with the terminal.

### BRIEF DESCRIPTION OF THE DRAWINGS

The above and other aspects, objects, features, and advantages of the present disclosure will become more apparent to those of ordinary skill in the art by describing some embodiments thereof in further detail with reference to the accompanying drawings, in which:
FIG. 1 is a perspective view illustrating a secondary battery according to an embodiment of the present invention;
FIG. 2 is an exploded perspective view of the secondary battery of FIG. 1;
FIG. 3 is a schematic view illustrating a configuration of an electrode assembly and an electrode tab of FIG. 2;
FIG. 4 is a perspective view illustrating a cap assembly and a connection member of FIG. 2 from below;
FIG. 5 is an exploded perspective view illustrating the cap assembly of FIG. 2 from above;
FIG. 6 is an exploded perspective view illustrating the cap assembly of FIG. 2 from below;
FIG. 7 is a cross-sectional view along the line VII-VII of FIG. 1;
FIG. 8 is a cross-sectional view along the line VIII-VIII of FIG. 7;
FIG. 9 is an enlarged view illustrating a region "IX" of FIG. 8;
FIG. 10 is an enlarged view illustrating a region "X" of FIG. 7;
FIG. 11 is an enlarged view illustrating a region "XI" of FIG. 7;
FIG. 12 is a perspective view illustrating a cap assembly and a connection member included in a secondary battery according to another embodiment of the present invention from below;
FIG. 13 is an enlarged view illustrating a region "XIII" of FIG. 12; and
FIG. 14 is a schematic perspective view illustrating a configuration of a battery pack according to an embodiment of the present invention.

### DETAILED DESCRIPTION

Herein, some embodiments of the present disclosure will be described in further detail with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

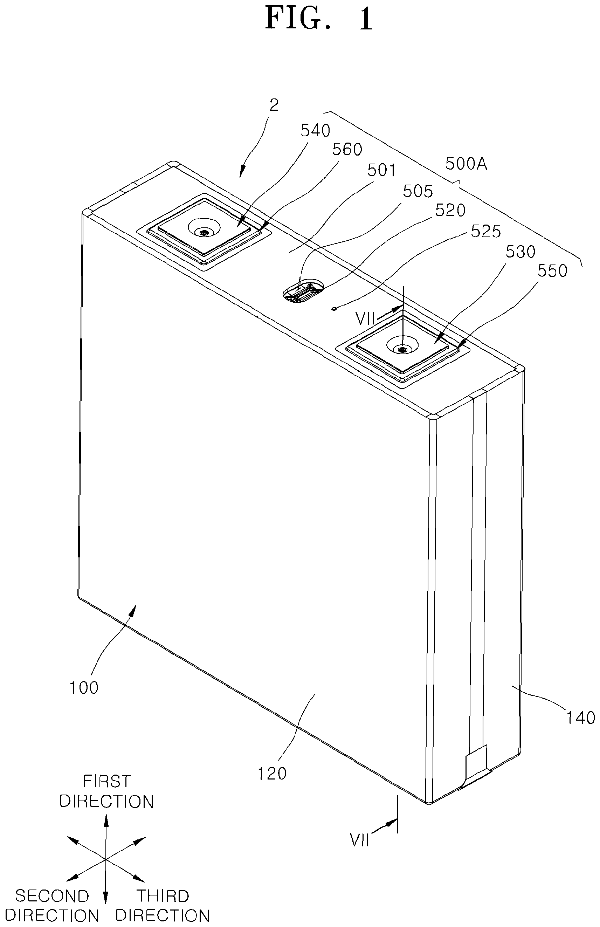

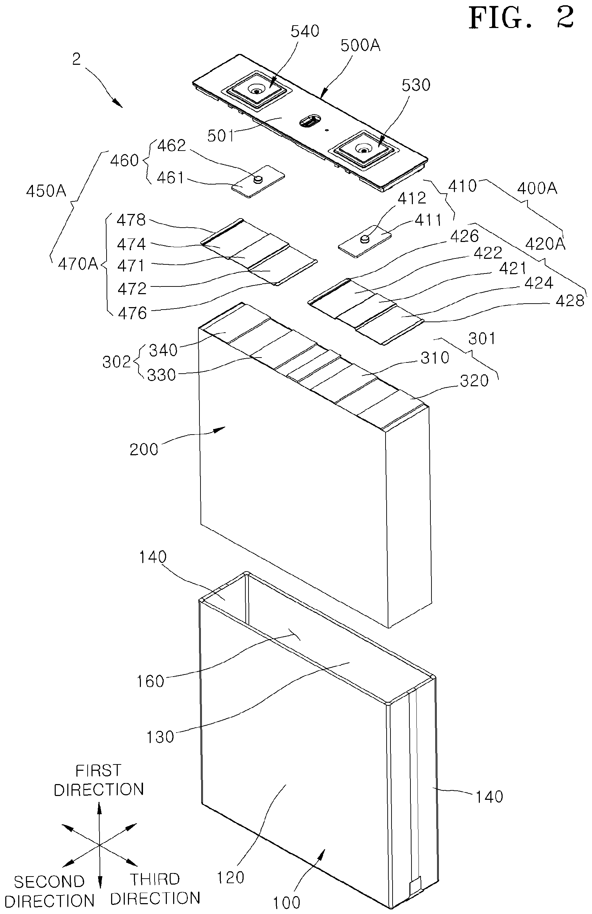

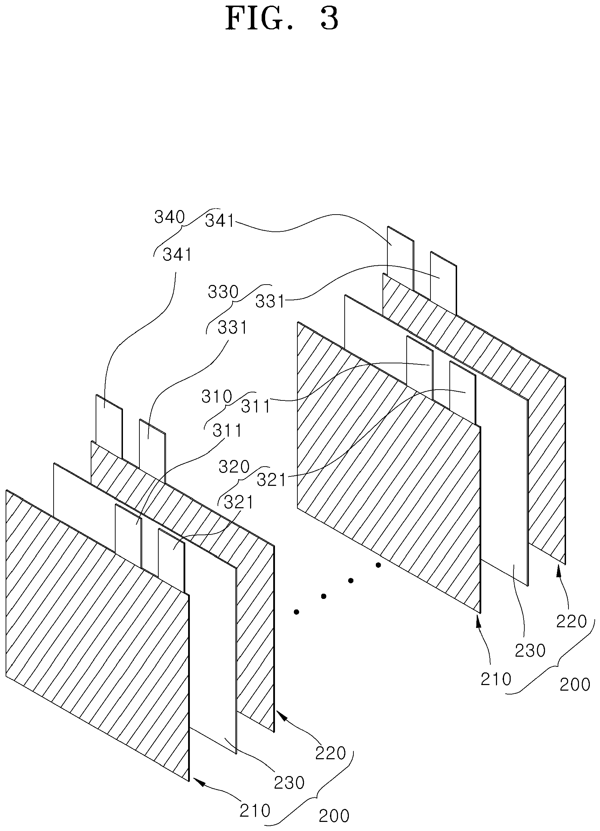

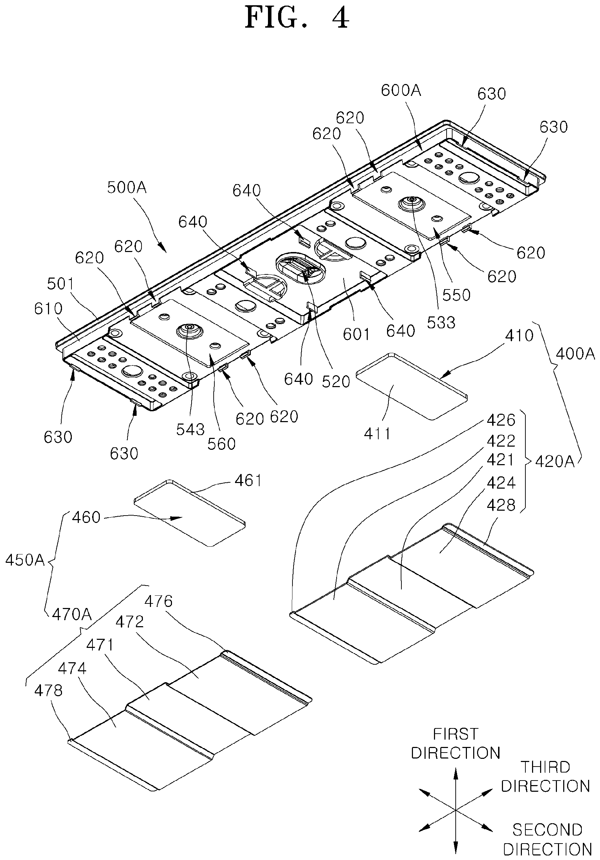

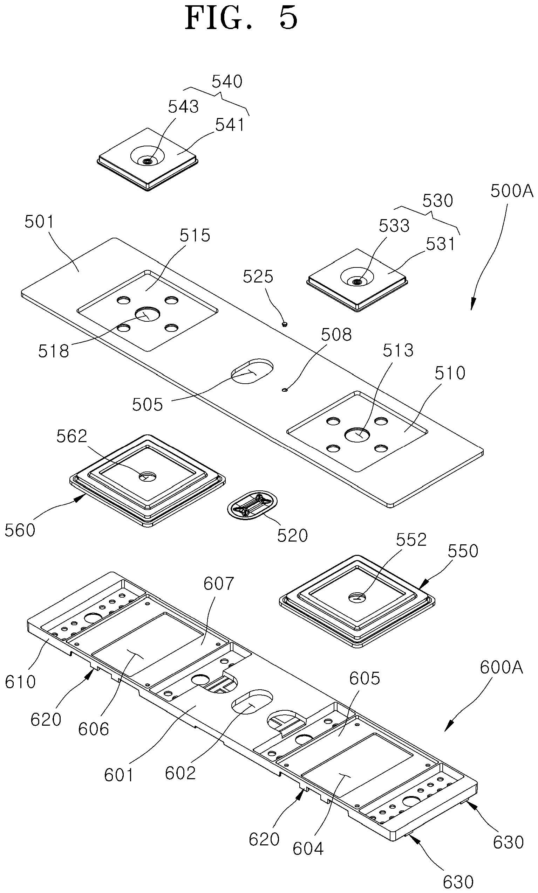

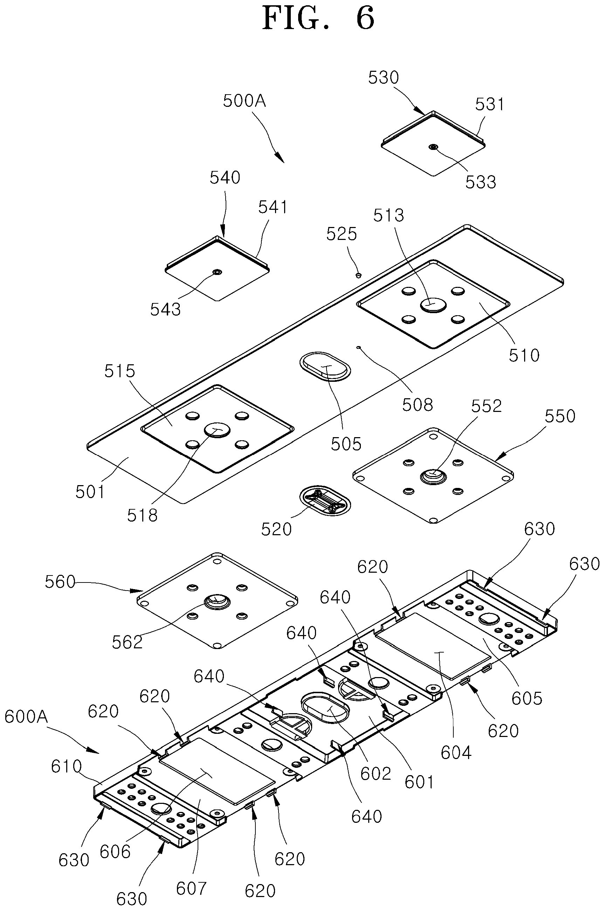

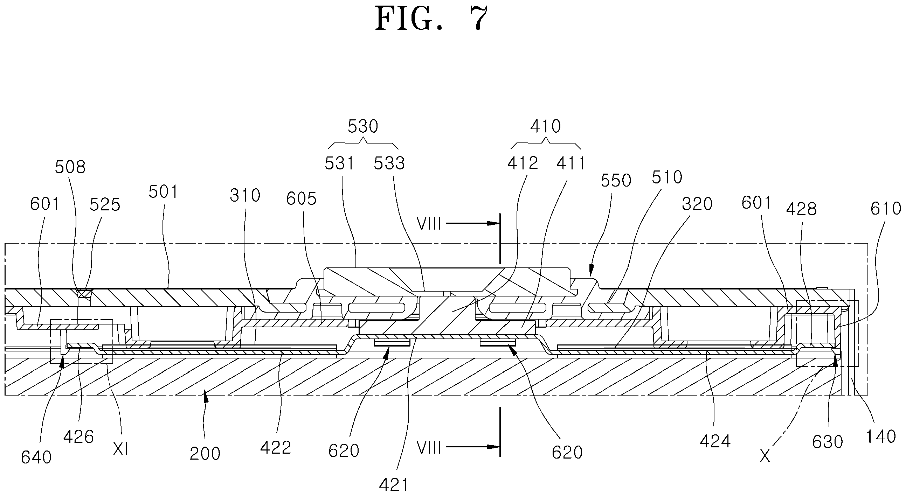

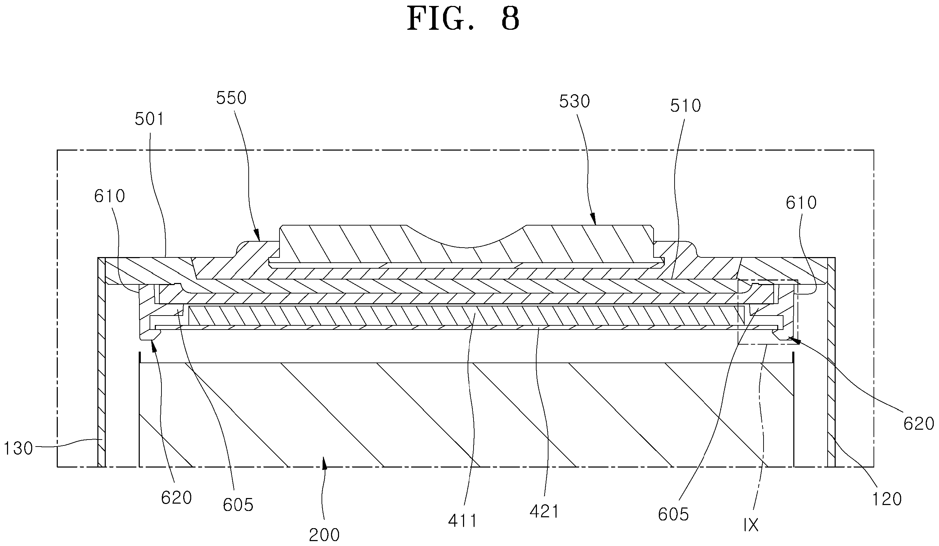

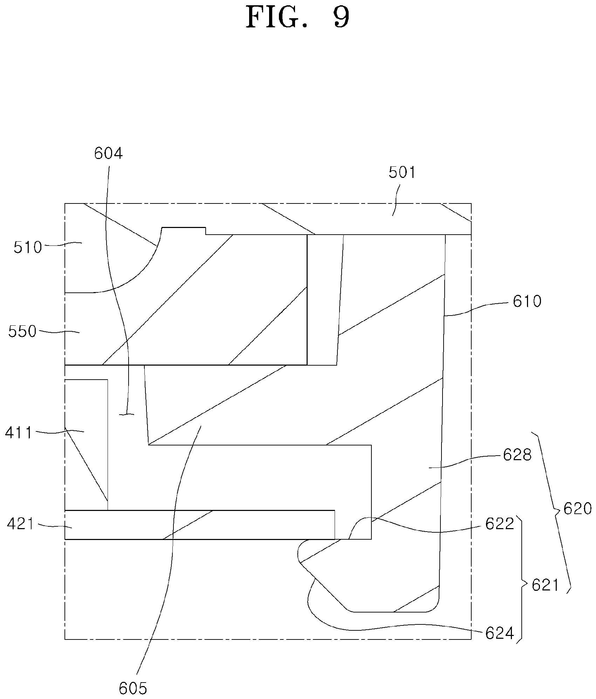

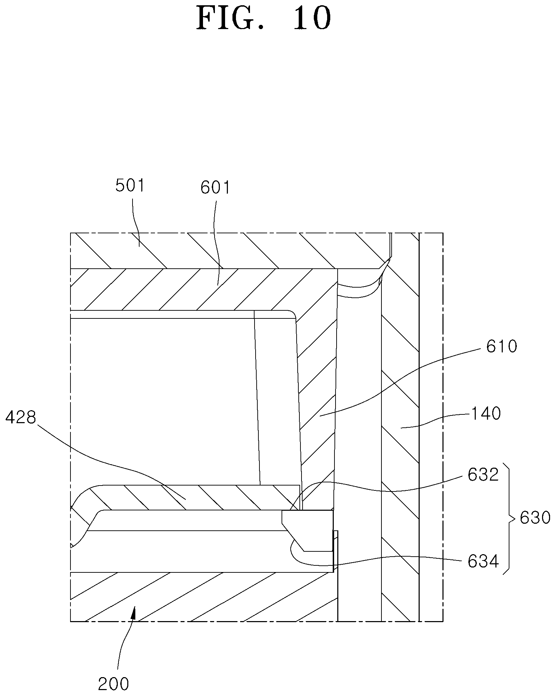

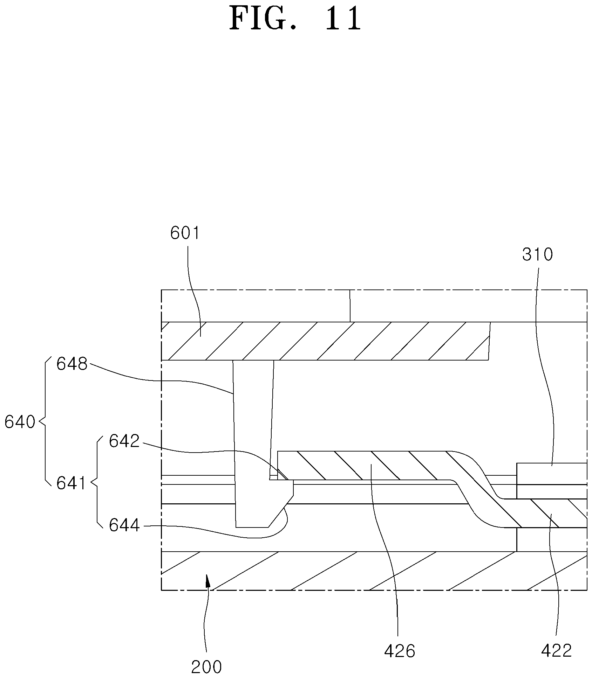

FIG. 1 is a perspective view illustrating a secondary battery according to an embodiment of the present invention; FIG. 2 is an exploded perspective view of the secondary battery of FIG. 1; FIG. 3 is a schematic view illustrating a configuration of an electrode assembly and an electrode tab of FIG. 2; FIG. 4 is a perspective view illustrating a cap assembly and a connection member of FIG. 2 from below; FIG. 5 is an exploded perspective view illustrating the cap assembly of FIG. 2 from above; FIG. 6 is an exploded perspective view illustrating the cap assembly of FIG. 2 from below; FIG. 7 is a cross-sectional view along the line VII-VII of FIG. 1; FIG. 8 is a cross-sectional view along the line VIII-VIII of FIG. 7; FIG. 9 is an enlarged view illustrating a region "IX" of FIG. 8; FIG. 10 is an enlarged view illustrating a region "X" of FIG. 7; and FIG. 11 is an enlarged view illustrating a region "XI" of FIG. 7.

Herein, it is illustratively described that the secondary battery is a lithium ion secondary battery and a square secondary battery. However, the present invention is not limited thereto, and the secondary battery may be a lithium polymer battery or a cylindrical battery, for example.

Referring to FIGS. 1 to 8, a secondary battery 2 according to an embodiment of the present invention includes a case 100, an electrode assembly 200, electrode tabs 301 and 302, connection members 400A and 450A, and a cap assembly 500A.

The case 100 may generally form an exterior of the secondary battery 2 and may accommodate the electrode assembly 200. The case 100 may include a bottom part (not illustrated), a front surface part 120, a rear surface part 130, and a pair of side surface parts 140.

The bottom part may form a lower exterior of the case 100 based on FIG. 1. The bottom part according to the present embodiment may have a shape of a rectangular plate. The front surface part 120, the rear surface part 130, and the pair of side surface parts 140 may form a peripheral surface exterior of the case 100.

The front surface part 120, the rear surface part 130, and the pair of side surface parts 140 according to the present embodiment may have the shape of a plate extending upward from an edge of the bottom part with respect to FIG. 1. The front surface part 120, the rear surface part 130, and the pair of side surface parts 140 may be arranged to surround an upper space of the bottom part. In a non-limiting embodiment, the front surface part 120, the rear surface part 130, and the pair of side surface parts 140 may be arranged to form a rectangular cross-sectional shape.

The front surface part 120 and the rear surface part 130 may be arranged parallel or substantially parallel to each other. The term "substantially parallel" means a deviation of +/- 10 degrees. The front surface part 120 and the rear surface part 130 may have the same or substantially the same area. The term "substantially the same are" means a deviation with respect to the area of +/- 10%. The pair of side surface parts 140 may be arranged parallel or substantially parallel to each other. The pair of side surface parts 140 may have the same or substantially the same area. The area of the pair of side surface parts 140 may be smaller than the area of the front surface part 120 and the rear surface part 130.

The case 100 may further include an opening 160. The opening 160 according to the present embodiment may be a space surrounded by upper ends of the front surface part 120, the rear surface part 130, and the pair of side surface parts 140. The opening 160 may interconnect an internal space and an external space of the case 100.

Accordingly, in an embodiment, the case 100 according to the present embodiment may have a rectangular shape having an open upper side.

Herein, with reference to FIGS. 1 and 2, a first direction may be a direction parallel to a vertical direction, a second direction may be a direction orthogonal to the first direction and crossing the front surface part 120 and the rear surface part 130, and a third direction may be a direction orthogonal to the first direction and the second direction and crossing the pair of side surface parts 140.

The electrode assembly 200 is housed inside the case 100. The electrode assembly 200 may function as a unit structure that performs a charging operation and a discharging operation of electricity in the secondary battery. The electrode assembly 200 may be accommodated inside the case 100. The electrode assembly 200 may include a first electrode 210, a second electrode 220, and a separator 230 disposed between the first electrode 210 and the second electrode 220. The first electrode 210 may be provided as a plurality of first electrodes 210, the separator 230 may be provided as a plurality of separators 230, and the second electrode 220 may be provided as a plurality of second electrodes 220.

Herein, it will be illustratively described that the electrode assembly 200 has a laminated form in which the plurality of first electrodes 210, the plurality of separators 230, and the plurality of second electrodes 220 are sequentially laminated in the third direction. However, the electrode assembly 200 is not limited to this form and may be formed to have a form in which the first electrode 210, the separator 230, and the second electrode 220 are laminated and are wound clockwise or counterclockwise about a winding axis.

The first electrode 210 may function as any one of a positive electrode or negative electrode of the electrode assembly 200. Herein, it will be illustratively described that the first electrode 210 is the positive electrode of the electrode assembly 200. However, the first electrode 210 is not limited thereto and may function as the negative electrode of the electrode assembly 200.

The first electrode 210 according to the present embodiment may be formed to have a shape of a foil including a metal material, such as aluminum or an aluminum alloy. A type, size, and shape of the first electrode 210 are not particularly limited, as long as the first electrode 210 is conductive while not causing a chemical change in the secondary battery. A cross-sectional shape of the first electrode 210 may be designed to have any of various shapes in addition to the rectangular shape illustrated in FIG. 3.

The first electrode 210 may be provided as a plurality of first electrodes 210. The plurality of first electrodes 210 may be arranged between the front surface part 120 and the rear surface part 130 of the case 100 in the second direction. The number of first electrodes 210 may be variously designed depending on a charging capacity or the like of the secondary battery 2.

At least a portion of the first electrode 210 may be coated with a first active material layer. Both surfaces of the first electrode 210 may be coated with the first active material layer, or only one surface of the first electrode 210 may be coated with the first active material layer.

In the present embodiment, as the first electrode 210 functions as a positive electrode, the first active material layer may include a positive electrode active material.

The positive electrode active material may be a compound capable of reversible intercalation and deintercalation of lithium (a lithiated intercalation compound). In further detail, one or more of composite oxides of a metal selected from cobalt, manganese, nickel, iron, and combinations thereof and lithium may be used as the positive electrode active material.

As an example, the positive electrode active material may include at least one of a lithium-iron-phosphorus oxide LFP (LiFePO₄), a lithium-manganese-iron-phosphorus oxide LMFP (LiMnFePO₄) and a lithium-nickel-cobalt-manganese oxide NCM (LiNiₓCo_{y}Mn_{z}O₂). Here, 0<x<1, 0<y<1, 0<z<1, and x+y+z=1 may be satisfied. The positive electrode active material may include only one of the lithium-iron-phosphorus oxide LFP (LiFePO₄), the lithium-manganese-iron-phosphorus oxide LMFP (LiMnFePO₄), and the lithium-nickel-cobalt-manganese oxide NCM (LiNiₓCo_{y}Mn_{z}O) or may include two or all of the lithium-iron-phosphorus oxide LFP (LiFePO₄), the lithium-manganese-iron-phosphorus oxide LMFP (LiMnFePO₄), and the lithium-nickel-cobalt-manganese oxide NCM (LiNixCoyMnzO).

The first active material layer may further include a positive electrode conductive material.

The positive electrode conductive material may be used to provide conductivity to the first active material layer and made of any suitable material, as long as the material does not cause a chemical change and is electrically conductive. Examples of the positive electrode conductive material may include carbon-based materials, such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, or the like, conductive polymers, such as polyphenylene derivatives, or mixtures thereof.

The first active material layer may further include a positive electrode binder.

The positive electrode binder may attach particles constituting the positive electrode active material to each other well and also attach the positive electrode active material to the first electrode 210 well. A non-aqueous binder, an aqueous binder, a dry binder, or a combination thereof may be used as examples of the positive electrode binder.

Examples of the non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenol resin, epoxy resin, polyvinyl alcohol, and combinations thereof.

When the aqueous binder is used as the positive electrode binder, a cellulose-based compound capable of imparting viscosity may be further included. A mixture of one or more of carboxymethyl cellulose, hydroxypropylmethyl cellulose, methyl cellulose, or an alkali metal salt thereof may be used as the cellulose-based compound. Na, K or Li may be used as the alkali metal.

The dry binder, which is a polymer material that may be fiberized, may be, for example, polytetrafluoroethylene, polyvinylidene fluoride, polyvinylidene fluoride-hexafluoropropylene copolymer, polyethylene oxide, or a combination thereof.

Although not illustrated, the first electrode 210 may include a first uncoated part that is not coated with the first active material layer. The first uncoated part may be disposed at an upper end of the first electrode 210 disposed inside the case 100 toward the opening 160. However, the first uncoated part is not limited to this form and may be formed over an entire edge area of the first electrode 210.

The second electrode 220 may function as the other of the positive electrode or the negative electrode of the electrode assembly 200. Herein, it will be illustratively described that the second electrode 220 is the negative electrode of the electrode assembly 200. However, the second electrode 220 is not limited thereto and may function as the positive electrode of the electrode assembly 200.

The second electrode 220 may be provided as a plurality of second electrodes 220. The plurality of second electrodes 220 may be arranged between the front surface part 120 and the rear surface part 130 of the case 100 in the second direction. The first electrode 210 and the second electrode 220 may be alternately arranged in the second direction. The second electrode 220 may be spaced by a distance (e.g., a predetermined distance) from the first electrode 210 in the second direction.

The second electrode 220 according to the present embodiment may be formed to have a shape of a foil including a metal material, such as copper, a copper alloy, nickel, or a nickel alloy. A type, size, and shape of the second electrode 220 are not particularly limited thereto, as long as the second electrode 220 is conductive while not causing a chemical change in the secondary battery. A cross-sectional shape of the second electrode 220 may be designed to have any of various shapes in addition to the rectangular shape illustrated in FIG. 3.

At least a portion of the second electrode 220 may be coated with a second active material layer. Both surfaces of the second electrode 220 may be coated with the second active material layer, or only one surface of the second electrode 220 may be coated with the second active material layer.

As the second electrode 220 functions as the negative electrode, the second active material layer may include a negative electrode active material.

The negative electrode active material may include a material capable of reversibly intercalating/deintercalating lithium ions, a lithium metal, an alloy of the lithium metal, a material capable of being doped to and dedoped from lithium, or a transition metal oxide.

The material capable of reversibly intercalating/deintercalating the lithium ions may be a carbon-based negative electrode active material, for example, crystalline carbon, amorphous carbon, or a combination thereof. Examples of the crystalline carbon include graphite, such as natural graphite or artificial graphite, a plate-like form, a flake-like form, a spherical form or a fibrous form, and examples of the amorphous carbon include soft carbon, hard carbon, mesophase pitch carbide, calcined coke, or the like.

In an embodiment, an alloy of lithium and a metal selected from Na, K, Rb, Cs, Fr, Be, Mg, Ca, Sr, Si, Sb, Pb, In, Zn, Ba, Ra, Ge, Al and Sn may be used as the alloy of the lithium metal.

In an embodiment, a Si-based negative electrode active material or a Sn-based negative electrode active material may be used as a material that may be doped to and dedoped from lithium. The Si-based negative electrode active material may be silicon, a silicon-carbon composite, SiOₓ (0 < x < 2), a Si-Q alloy (Q is selected from an alkali metal, an alkaline earth metal, a group 13 element, a group 14 element (excluding Si), a group 15 element, a group 16 element, a transition metal, a rare earth element, and combinations thereof), or a combination thereof. The Sn-based negative electrode active material may be Sn, SnO₂, a Sn-based alloy, or a combination thereof.

The silicon-carbon composite may be a composite of silicon and amorphous carbon. According to an implementation, the silicon-carbon composite may be in the form of silicon particles and amorphous carbon coated on surfaces of the silicon particles. For example, the silicon-carbon composite may include secondary particles (core) assembled with primary silicon particles and an amorphous carbon coating layer (shell) located on surfaces of the secondary particles. The amorphous carbon may also be located between the primary silicon particles, and, for a non-limiting example, the primary silicon particles may be coated with the amorphous carbon. The secondary particles may be dispersed in an amorphous carbon matrix.

The silicon-carbon composite may further include crystalline carbon. For example, the silicon-carbon composite may include a core including the crystalline carbon and the silicon particles and an amorphous carbon coating layer located on a surface of the core.

The Si-based negative electrode active material or Sn-based negative electrode active material may be mixed with the carbon-based negative electrode active material when used.

The second active material layer may further include a negative electrode conductive material and a negative electrode binder.

The negative electrode conductive material may be used to provide conductivity to the second active material layer and made of any suitable material, as long as the material does not cause a chemical change and is electrically conductive. Examples of the negative electrode conductive material may include carbon-based materials, such as natural graphite, artificial graphite, carbon black, acetylene black, Ketjen black, carbon fibers, carbon nanofibers, and carbon nanotubes, metal-based materials in the form of metal powder or metal fibers containing copper, nickel, aluminum, silver, or the like, conductive polymers such as polyphenylene derivatives, or mixtures thereof.

The negative electrode binder may attach particles constituting the negative electrode active material to each other well and also attach the negative electrode active material to the second electrode 220 well.

A non-aqueous binder, an aqueous binder, a dry binder, or a combination thereof may be used as examples of the negative electrode binder.

Examples of the non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluoroelastomer, polyethylene oxide, polyvinylpyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenol resin, epoxy resin, polyvinyl alcohol, and combinations thereof.

When the aqueous binder is used as the negative electrode binder, the cellulose-based compound capable of imparting viscosity may be further included. A mixture of one or more of carboxymethyl cellulose, hydroxypropylmethyl cellulose, methyl cellulose, or an alkali metal salt thereof may be used as the cellulose-based compound. Na, K or Li may be used as the alkali metal.

The dry binder, which is a polymer material that may be fiberized, may be, for example, polytetrafluoroethylene, polyvinylidene fluoride, polyvinylidene fluoride-hexafluoropropylene copolymer, polyethylene oxide, or a combination thereof.

The second electrode 220 may include a second uncoated part that is not coated with the second active material layer. The second uncoated part according to the present embodiment may be disposed at an upper end of the second electrode 220 disposed inside the case 100 toward the opening 160. However, the second uncoated part is not limited to this form and may be formed over an entire edge area of the second electrode 220.

The separator 230 may be disposed between the first electrode 210 and the second electrode 220. The separator 230 may prevent or substantially prevent a short circuit between the first electrode 210 and the second electrode 220 while allowing movement of lithium ions between the first electrode 210 and the second electrode 220.

The separator 230 may be disposed to surround an entire surface area of the electrode assembly 200. Accordingly, the separator 230 may prevent or substantially prevent the first electrode 210 and the second electrode 220 from being directly exposed to the outside of the electrode assembly 200.

Polyethylene, polypropylene, polyvinylidene fluoride, or a multi-layer membrane of two or more thereof may be used as the separator 230, and a mixed multi-layer membrane such as a polyethylene/polypropylene two-layer separator, a polyethylene/polypropylene/polyethylene three-layer separator, or a polypropylene/polyethylene/polypropylene three-layer separator may be used as the separator 230.

The separator 230 may include a porous substrate and a coating layer including an organic material, an inorganic material, or a combination thereof located on one surface or both surfaces of the porous substrate.

The porous substrate may be a polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, cyclic olefin copolymer, polyphenylene sulfide, polyethylene naphthalate, glass fiber, and polytetrafluoroethylene (e.g., Teflon) or a polymer film formed from two or more copolymers or mixtures thereof.

The organic material may include a polyvinylidene fluoride-based polymer or a (meth)acrylic-based polymer.

In an embodiment, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present invention is not limited thereto.

The organic material and the inorganic material may be mixed with and present in a coating layer or may be present in a form in which a coating layer including the organic material and a coating layer including the inorganic material are laminated.

The electrode tabs 301 and 302 are connected to the electrode assembly 200. The first electrode tab 301 may be connected to the first electrode 210 and protrude outward from the electrode assembly 200. As the first electrode 210 is illustrated herein as a positive electrode, the first electrode tab 301 may function as a positive electrode tab of the secondary battery 2. However, the first electrode tab 301 is not limited thereto and may function as a negative electrode tab of the secondary battery 2 if the first electrode 210 is a negative electrode.

The first electrode tab 301 according to the present embodiment may extend from the electrode assembly 200 in the first direction. That is, the first electrode tab 301 may extend toward the opening 160 from the inside of the case 100. The first electrode tab 301 according to the present embodiment may include a first inner electrode tab 310 and a first outer electrode tab 320.

The first inner electrode tab 310 and the first outer electrode tab 320 may be spaced apart from each other in the third direction. As an example, the first outer electrode tab 320 and the first inner electrode tab 310 may be sequentially arranged in the third direction. That is, the first outer electrode tab 320 may be disposed at a position spaced by a distance (e.g., a predetermined distance) from the first inner electrode tab 310 in the third direction. In an embodiment, the first outer electrode tab 320 may be disposed relatively close to the side surface part 140 disposed closer to a first terminal 530 than to the first inner electrode tab 310.

The first inner electrode tab 310 according to the present embodiment may be an assembly of a plurality of first inner tabs 311 formed by notching the first uncoated parts of the plurality of first electrodes 210. The first outer electrode tab 320 may be an assembly of a plurality of first outer tabs 321 formed by notching the first uncoated parts of the plurality of first electrodes 210.

The secondary battery 2 according to the present embodiment may further include the second electrode tab 302. The second electrode tab 302 may be connected to the second electrode 220 and protrude outward from the electrode assembly 200. As the second electrode 220 is illustrated as a negative electrode, the second electrode tab 302 may function as a negative electrode tab of the secondary battery 2. However, the second electrode tab 302 is not limited thereto and may function as a positive electrode tab of the secondary battery 2 if the second electrode 220 is a positive electrode.

The second electrode tab 302 according to the present embodiment may extend from the electrode assembly 200 in the first direction. That is, the second electrode tab 302 may extend toward the opening 160 from the inside of the case 100.

The first electrode tab 301 and the second electrode tab 302 may be arranged to be spaced apart from each other in the third direction. As an example, the second electrode tab 302 may be disposed at a position spaced by a distance (e.g., a predetermined distance) from the first electrode tab 301 in the third direction.

The second electrode tab 302 according to the present non-limiting embodiment may include a second inner electrode tab 330 and a second outer electrode tab 340.

The second inner electrode tab 330 and the second outer electrode tab 340 may be spaced apart from each other in the third direction. That is, the second outer electrode tab 340 may be disposed at a position spaced by a distance (e.g., a predetermined distance) from the second inner electrode tab 330 in the third direction. In an embodiment, the second outer electrode tab 340 may be disposed relatively close to the side surface part 140 disposed closer to a second terminal 540 than to the second inner electrode tab 330.

The second inner electrode tab 330 according to the present embodiment may be an assembly of a plurality of second inner tabs 331 formed by notching the second uncoated parts of the plurality of second electrodes 220. The second outer electrode tab 340 may be an assembly of a plurality of second outer tabs 341 formed by notching the second uncoated parts of the plurality of second electrodes 220.

The connection members 400A and 450A are electrically connected to the electrode tabs 301 and 302. The connection members 400A and 450A may include a first connection member 400A and a second connection member 450A.

The first connection member 400A may be disposed between the electrode assembly 200 and the cap assembly 500A. The first connection member 400A may be electrically coupled to the first terminal 530 and the first electrode tab 301. The first connection member 400A may electrically connect the first terminal 530 and the first electrode tab 301. The first connection member 400A may be formed of an electrically conductive material. In a non-limiting embodiment, the first connection member 400A may be formed of a same material as the first terminal 530.

The first connection member 400A may include a first current collector 410 and a first current collecting plate 420A. The first current collector 410 may be connected to the first terminal 530. The first current collector 410 may include a first current collector body 411 and a first current collector boss 412. The first current collector body 411 may form an exterior on a side of the first current collector 410 and may support the first current collector boss 412.

The first current collector body 411 may be disposed between the electrode assembly 200 and the first terminal 530. In an embodiment, the first current collector body 411 may be welded to the first current collecting plate 420A. The first current collector body 411 may be spaced by a distance (e.g., a predetermined distance) from a lower surface of the first terminal 530 in the first direction. A cross-sectional shape of the first current collector body 411 may be designed to have any of various shapes, such as a circular shape, an oval shape, and a polygonal shape in addition to a quadrangular shape illustrated in FIGS. 2 and 4.

The first current collector boss 412 may protrude from the first current collector body 411 toward the first terminal 530 and, in an embodiment, may be connected to the first terminal 530 by welding. The first current collector boss 412 according to the present embodiment may extend upward in the first direction. In an embodiment, the first current collector boss 412 may have a cylindrical shape extending from the first current collector body 411 in the first direction.

In an embodiment, an upper surface of the first current collector boss 412 may be joined to the lower surface of the first terminal 530 by laser welding. A cross-sectional shape of the first current collector boss 412 may be designed to have any of various shapes, such as an oval shape or a polygonal shape, in addition to the circular shape illustrated in FIG. 2.

In an embodiment, the first current collecting plate 420A may be fixed to the first current collector 410 by welding and connected to the first electrode tab 301. The first current collecting plate 420A according to the present embodiment may include a first current collector joining part 421, a first inner electrode tab joining part 422, a first outer electrode tab joining part 424, a first inner end 426, and a first outer end 428.

The first current collector joining part 421 may be coupled to the first current collector 410 of the first current collecting plate 420A. The first current collector joining part 421 according to the present embodiment may be disposed between the first current collector body 411 and the electrode assembly 200. The first current collector joining part 421 may be in contact with a lower surface of the first current collector body 411 located on an opposite side to the first current collector boss 412. The first current collector joining part 421 may be fixed to the lower surface of the first current collector body 411 by any of various types of coupling methods, such as welding, latching, bolting, or adhesion.

The first electrode tab joining parts 422 and 424 may be provided as a pair of first electrode tab joining parts 422 and 424. In other words, the pair of first electrode tab joining parts 422 and 424 may include the first inner electrode tab joining part 422 and the first outer electrode tab joining part 424. The first inner electrode tab joining part 422 and the first outer electrode tab joining part 424 may be connected to both, or opposite, ends of the first current collector joining part 421 in the third direction in a stepwise manner.

The first inner electrode tab joining part 422 and the first outer electrode tab joining part 424 may protrude from the first current collector joining part 421 in opposite directions. The first inner electrode tab joining part 422 may extend toward the second terminal 540 in the third direction, and the first outer electrode tab joining part 424 may extend away from the second terminal 540 in the third direction.

The first inner electrode tab joining part 422 may be disposed to face the first inner electrode tab 310 in the first direction. The first inner electrode tab joining part 422 may be mutually joined to the first inner electrode tab 310 by, for example, laser welding.

The first outer electrode tab joining part 424 may be disposed to face the first outer electrode tab 320 in the first direction. The first outer electrode tab joining part 424 may be mutually joined to the first outer electrode tab 320 by, for example, laser welding.

The first inner end 426 may be an end of the first inner electrode tab joining part 422, which is relatively far from the first current collector joining part 421, in a longitudinal direction, and may extend from the first inner electrode tab joining part 422 toward a cap plate 501 in a stepwise manner.

The first outer end 428 may be an end of the first outer electrode tab joining part 424, which is relatively far from the first current collector joining part 421, in a longitudinal direction, and may extend from the first outer electrode tab joining part 424 toward the cap plate 501 in a stepwise manner.

The second connection member 450A may be disposed between the electrode assembly 200 and the cap assembly 500A. The second connection member 450A may be electrically coupled to the second terminal 540 and the second electrode tab 302. The second connection member 450A may electrically connect the second terminal 540 and the second electrode tab 302. The second connection member 450A may be formed of an electrically conductive material. In a non-limiting embodiment, the second connection member 450A may be formed of a same material as the second terminal 540.

The second connection member 450A may include a second current collector 460 and a second current collecting plate 470A. The second current collector 460 may be connected to the second terminal 540. The second current collector 460 may include a second current collector body 461 and a second current collector boss 462. The second current collector body 461 may form an exterior on a side of the second current collector 460 and may support the second current collector boss 462.

The second current collector body 461 may be disposed between the electrode assembly 200 and the second terminal 540. In a non-limiting embodiment, the second current collector body 461 may be welded to the second current collecting plate 470A. The second current collector body 461 may be spaced by a distance (e.g., a predetermined distance) from a lower surface of the second terminal 540 in the first direction. A cross-sectional shape of the second current collector body 461 may be designed to have any of various shapes, such as a circular shape, an oval shape, and a polygonal shape, in addition to the quadrangular shape illustrated in FIGS. 2 and 4.

The second current collector boss 462 may protrude from the second current collector body 461 toward the second terminal 540 and, in an embodiment, may be connected to the second terminal 540 by welding. The second current collector boss 462 according to the present embodiment may extend upward in the first direction. In an embodiment, the second current collector boss 462 may have a cylindrical shape extending from the second current collector body 461 in the first direction.

In a non-limiting embodiment, an upper surface of the second current collector boss 462 may be joined to the lower surface of the second terminal 540 by laser welding. A cross-sectional shape of the second current collector boss 462 may be designed to have an of various shapes, such as an oval shape or a polygonal shape, in addition to the circular shape illustrated in FIG. 2.

In a non-limiting embodiment, the second current collecting plate 470A may be fixed to the second current collector 460 by welding and connected to the second electrode tab 302. The second current collecting plate 470A according to the present embodiment may include a second current collector joining part 471, a second inner electrode tab joining part 472, a second outer electrode tab joining part 474, a second inner end 476, and a second outer end 478.

The second current collector joining part 471 may be coupled to the second current collector 460 of the second current collecting plate 470A. The second current collector joining part 471 according to the present embodiment may be disposed between the second current collector body 461 and the electrode assembly 200. The second current collector joining part 471 may be in contact with a lower surface of the second current collector body 461 located on an opposite side to the second current collector boss 462. The second current collector joining part 471 may be fixed to the lower surface of the second current collector body 461 by any of various types of coupling methods, such as welding, bolting, or adhesion.

The second electrode tab joining parts 472 and 474 may be provided as a pair of second electrode tab joining parts 472 and 474. In other words, the pair of second electrode tab joining parts 472 and 474 may include the second inner electrode tab joining part 472 and the second outer electrode tab joining part 474. The second inner electrode tab joining part 472 and the second outer electrode tab joining part 474 may be connected to both, or opposite, ends of the second current collector joining part 471 in the third direction in a stepwise manner.

The second inner electrode tab joining part 472 and the second outer electrode tab joining part 474 may protrude from the second current collector joining part 471 in opposite directions. The second inner electrode tab joining part 472 may extend toward the first terminal 530 in the third direction, and the second outer electrode tab joining part 474 may extend away from the first terminal 530 in the third direction.

The second inner electrode tab joining part 472 may be disposed to face the second inner electrode tab 330 in the first direction. The second inner electrode tab joining part 472 may be mutually joined to the second inner electrode tab 330 by, for example, laser welding.

The second outer electrode tab joining part 474 may be disposed to face the second outer electrode tab 340 in the first direction. The second outer electrode tab joining part 474 may be mutually joined to the second outer electrode tab 340 by, for example, laser welding.

The second inner end 476 may be an end of the second inner electrode tab joining part 472, which is relatively far from the second current collector joining part 471, in a longitudinal direction, and may extend from the second inner electrode tab joining part 472 toward the cap plate 501 in a stepwise manner.

The second outer end 478 may be an end of the second outer electrode tab joining part 474, which is relatively far from the second current collector joining part 471, in a longitudinal direction, and may extend from the second outer electrode tab joining part 474 toward the cap plate 501 in a stepwise manner.

The cap assembly 500A may be coupled to the case 100 and may seal the case 100. The cap assembly 500A may be disposed to face the electrode assembly 200 in the first direction. The cap assembly 500A includes the cap plate 501, the pair of terminals 530 and 540, and a connection member towing part.

The cap plate 501 closes the opening 160 of the case 100. The cap plate 501 may be formed to have a shape of a generally rectangular flat plate. The cap plate 501 may be disposed at a position spaced by a distance (e.g., a predetermined distance) from the electrode assembly 200 in the first direction. The cap plate 501 may be disposed parallel to a bottom part of the case 100. The cap plate 501 may be coupled to the case 100 by any of various types of coupling methods, such as welding, latching, bolting, and press-fitting.

The pair of terminals 530 and 540 are connected to the cap plate 501. The pair of terminals 530 and 540 may include the first terminal 530 and the second terminal 540. The first terminal 530 and the second terminal 540 may be coupled to be spaced apart from both, or opposite, ends of the cap plate 501 in a longitudinal direction.

The first terminal 530 may protrude outward from the cap plate 501. The first terminal 530 may be electrically connected to the first electrode 210. As the first electrode 210 according to the present embodiment functions as a positive electrode, the first terminal 530 may be a positive electrode terminal of the secondary battery 2.

An upper end of the first terminal 530 may protrude from the cap plate 501 in the first direction. FIGS. 1, 2, and 5 illustratively illustrate that the first terminal 530 has a quadrangular cross-sectional shape, but a cross-sectional shape of the first terminal 530 is not limited thereto, and the first terminal 530 may be designed to have any of various shapes, such as a circular shape, an oval shape, and a polygonal shape. The first terminal 530 may be formed of an electrically conductive material, such as aluminum, nickel, or copper.

The first terminal 530 may include a first thick part 531 and a first thin part 533 that is thinner than the first thick part 531 in the first direction. The first thin part 533 may be provided in a central portion of the first terminal 530. The first thin part 533 may be aligned with the first current collector boss 412 and coupled to the first current collector boss 412 by welding.

A first boss through-hole 513 through which the first current collector boss 412 passes may be formed in the cap plate 501 such that the first current collector boss 412 may pass through the cap plate 501 and be welded to the first thin part 533.

The cap assembly 500A may further include a first gasket 550. The first gasket 550 may electrically insulate the cap plate 501 and the first terminal 530 from each other and prevent or substantially prevent moisture or foreign substances from being introduced between the cap plate 501 and the first terminal 530.

The cap plate 501 may be provided with a first gasket seating part 510 on which the first gasket 550 is seated. The first boss through-hole 513 may be formed in the first gasket seating part 510. The first current collector boss 412 may be welded to the first thin part 533 while passing through the first gasket 550. A first boss through-hole 552 through which the first current collector boss 412 passes may be formed in the first gasket 550.

The first gasket 550 according to the present embodiment may include an insulating material. For example, the first gasket 550 may be formed of an insulating material, such as polyethylene (PE), polypropylene (PP), or polyethylene terephthalate (PET) rubber. The first gasket 550 may be fixed between the cap plate 501 and the first terminal 530 by press-fitting, injection, adhesion, or the like.

The second terminal 540 may protrude outward from the cap plate 501. The second terminal 540 may be electrically connected to the second electrode 220. As the second electrode 220 according to the present embodiment functions as a negative electrode, the second terminal 540 may be a negative electrode terminal of the secondary battery 2.

An upper end of the second terminal 540 may protrude from the cap plate 501 in the first direction. FIGS. 1, 2, and 5 illustratively illustrate that the second terminal 540 has a quadrangular cross-sectional shape, but a cross-sectional shape of the second terminal 540 is not limited thereto, and the second terminal 540 may be designed to have any of various shapes, such as a circular shape, an oval shape, and a polygonal shape. The second terminal 540 may be formed of an electrically conductive material, such as aluminum, nickel, or copper.

The second terminal 540 may include a second thick part 541 and a second thin part 543 that is thinner than the second thick part 541 in the first direction. The second thin part 543 may be provided in a central portion of the second terminal 540. The second thin part 543 may be aligned with the second current collector boss 462 and coupled to the second current collector boss 462 by welding.

A second boss through-hole 518 through which the second current collector boss 462 passes may be formed in the cap plate 501 so that the second current collector boss 462 may pass through the cap plate 501 and be welded to the second thin part 543.

The cap assembly 500A may further include a second gasket 560. The second gasket 560 may electrically insulate the cap plate 501 and the second terminal 540 from each other and prevent or substantially prevent moisture or foreign substances from being introduced between the cap plate 501 and the second terminal 540.

The cap plate 501 may be provided with a second gasket seating part 515 on which the second gasket 560 is seated. The second boss through-hole 518 may be formed in the second gasket seating part 515. The second current collector boss 462 may be welded to the second thin part 543 while passing through the second gasket 560. A second boss through-hole 562 through which the second current collector boss 462 passes may be formed in the second gasket 560.

The second gasket 560 according to the present embodiment may include an insulating material. For example, the second gasket 560 may be formed of an insulating material, such as polyethylene (PE), polypropylene (PP), or polyethylene terephthalate (PET) rubber. The second gasket 560 may be fixed between the cap plate 501 and the second terminal 540 by press-fitting, injection, adhesion, or the like.

The cap assembly 500A according to the present embodiment may further include a vent hole 505 and a cell vent 520.

The vent hole 505 may be formed to have a shape of a hole passing through the cap plate 501 in the first direction. The vent hole 505 may provide a path through which flames, gas, smoke, and the like formed inside the case 100 are discharged to the outside of the case 100 during thermal runaway of the secondary battery 2 due to overcurrent or the like. The vent hole 505 may be disposed between the first terminal 530 and the second terminal 540. A cross-sectional shape of the vent hole 505 may be designed to have any of various shapes, such as an oval shape, a circular shape, and a polygonal shape.

The cell vent 520 may be installed in the vent hole 505 and opened or closed in conjunction with a change in internal pressure of the case 100. That is, the cell vent 520 may close the vent hole 505 during a normal operation of the secondary battery 2, to prevent or substantially prevent an electrolyte or the like inside the case 100 from leaking out of the case 100 or moisture, foreign substances, and the like from being introduced into the case 100. The cell vent 520 may open the vent hole 505 during thermal runaway of the secondary battery 2 to allow flames, gas, smoke, and the like formed inside the case 100 to be discharged to the outside of the case 100.

The cell vent 520 may be formed to have the shape of a plate. The cell vent 520 may be fixed to the cap plate 501 by any of various types of coupling methods, such as welding, bolting, and press-fitting. The cell vent 520 may be disposed inside the vent hole 505 or may be disposed to face the vent hole 505 in the first direction on an upper side or a lower side of the cap plate 501.

A thickness of the cell vent 520 parallel to the first direction may be smaller than a thickness of the cap plate 501. Accordingly, the cell vent 520 may easily burst or break when the internal pressure of the case 100 increases. In an embodiment, the cell vent 520 may include a notch concavely formed inside the cell vent 520 such that the cell vent 520 preferentially breaks when the internal pressure of the case 100 increases.

The cap assembly 500A may further include an electrolyte injection port 508 formed to pass through the cap plate 501 and a sealing plug 525 that openably closes the electrolyte injection port 508. The electrolyte injection port 508 may be disposed to be spaced apart from the vent hole 505 in a longitudinal direction of the cap plate 501. The electrolyte injection port 508 may be disposed between the first terminal 530 and the second terminal 540.

The cap assembly 500A according to the present embodiment may further include an insulating plate 600A.

The insulating plate 600A may be disposed between the cap plate 501 and the electrode assembly 200. The insulating plate 600A may prevent or substantially prevent direct contact between the cap plate 501 and the electrode assembly 200 to insulate the cap plate 501 and the electrode assembly 200. The insulating plate 600A may fix a location of the electrode assembly 200 inside the case 100. The insulating plate 600A may prevent or substantially prevent the electrode assembly 200 from breaking if the cap plate 501 is deformed toward the inside of the case 100 due to an external impact or the like.

The insulating plate 600A according to the present embodiment may be disposed inside the case 100 to face the electrode assembly 200 in the first direction. That is, the electrode assembly 200, the insulating plate 600A, and the cap plate 501 may be sequentially arranged in the first direction.

The insulating plate 600A may include an insulating material. For example, the insulating plate 600A may be formed of an insulating material, such as polyethylene (PE), polypropylene (PP), or polyethylene terephthalate (PET) rubber. The insulating plate 600A may be coupled to and supported on the cap plate 501 by, for example, heat staking.

The insulating plate 600A may include a base part 601 extending in the third direction to overlap the cap plate 501 in the first direction and an outer skirt part 610 bent at an outer edge of the base part 601 and protruding toward the electrode assembly 200 in the first direction.

A vent hole 602, a first current collector through-hole 604, a first gasket contact portion 605, a second current collector through-hole 606, and a second gasket contact portion 607 may be formed in the base part 601. The vent hole 602 of the base part 601 may be formed to be aligned with the vent hole 505 of the cap plate 501 in the first direction.

The first current collector through-hole 604 may be formed such that the first current collector body 411 of the first current collector 410 passes through the base part 601, and the second current collector through-hole 606 may be formed such that the second current collector body 461 of the second current collector 460 passes through the base part 601.

The first gasket contact portion 605 may be provided adjacent to the first current collector through-hole 604 to be in surface contact with the first gasket 550, and the second gasket contact portion 607 may be provided adjacent to the second current collector through-hole 606 to be in surface contact with the second gasket 560.

Referring to FIGS. 2 and 4 to 11, the connection member towing part pulls the connection members 400A and 450A such that the connection members 400A and 450A come into contact with the terminals 530 and 540. The connection member towing part may include a current collector joining part hook 620, an outer electrode tab joining part hook 630, and an inner electrode tab joining part hook 640.

The current collector joining part hook 620, the outer electrode tab joining part hook 630, and the inner electrode tab joining part hook 640 may be connected to the insulating plate 600A. The current collector joining part hook 620, the outer electrode tab joining part hook 630, and the inner electrode tab joining part hook 640 may pull toward the first terminal 530 while in contact with the first current collecting plate 420A of the first connection member 400A or may pull toward the second terminal 540 while in contact with the second current collecting plate 470A of the second connection member 450A.

The current collector joining part hook 620 may pull the first current collector joining part 421 toward the first terminal 530 or pull the second current collector joining part 471 toward the second terminal 540.

As illustrated in FIGS. 7 and 8, the first current collector joining part 421 and the first current collector 410 may be welded in surface contact with each other, and the current collector joining part hook 620 may pull toward the first terminal 530 while in contact with an outer peripheral portion of the first current collector joining part 421 that does not overlap the first current collector 410 in the first direction. Similarly, the second current collector joining part 471 and the second current collector 460 may be welded in surface contact with each other, and the current collector joining part hook 620 may pull toward the second terminal 540 while in contact with an outer peripheral portion of the second current collector joining part 471 that does not overlap the second current collector 460 in the first direction.

The current collector joining part hook 620 may be provided as a plurality of current collector joining part hooks 620. The plurality of current collector joining part hooks 620 may protrude toward the first current collector joining part 421 or toward the second current collector joining part 471 from an end portion of the insulating plate 600A in a width direction. For example, the plurality of current collector joining part hooks 620 may protrude downward in the first direction from a first side and a second side of the outer skirt part 610 in the second direction to be spaced apart from each other in the second direction.

Each of the current collector joining part hooks 620 may include a hook head 621 and a spacer 628. The hook head 621 may include a stopper surface 622 and an inclined surface 624.

The stopper surface 622 may block the first current collector joining part 421 to prevent or substantially prevent the first current collector joining part 421 from moving away from the first terminal 530 or block the second current collector joining part 471 to prevent or substantially prevent the second current collector joining part 471 from moving away from the second terminal 540.

The stopper surface 622 may be a plane orthogonal to the first direction. The inclined surface 624 may be a surface inclined with respect to the stopper surface 622. The inclined surface 624 may be inclined away from the first current collector joining part 421 in the second direction as the inclined surface 624 becomes closer to the electrode assembly 200 in the first direction.

The spacer 628 is interposed between the outer skirt part 610 and the hook head 621 such that the outer skirt part 610 and the hook head 621 are spaced apart from each other, and the spacer 628 connects the outer skirt part 610 and the hook head 621. The hook head 621 including the stopper surface 622 and the inclined surface 624 may be located between the first current collector joining part 421 and the electrode assembly 200 inside the case 100.

The outer electrode tab joining part hook 630 may pull the first outer electrode tab joining part 424 toward the first terminal 530 or pull the second outer electrode tab joining part 474 toward the second terminal 540. In an embodiment, for example, as illustrated in FIG. 7 and FIG. 10, the outer electrode tab joining part hook 630 may pull the first outer end 428, which is a stepped end of the first outer electrode tab joining part 424, toward the first terminal 530. In an embodiment, the outer electrode tab joining part hook 630 may pull the second outer end 478, which is a stepped end of the second outer electrode tab joining part 474, toward the second terminal 540.

The outer electrode tab joining part hook 630 may be provided as a plurality of outer electrode tab joining part hooks 630. The plurality of outer electrode tab joining part hooks 630 may protrude toward the first outer electrode tab joining part 424 or toward the second outer electrode tab joining part 474 from an end of the insulating plate 600A in a longitudinal direction. For example, the plurality of outer electrode tab joining part hooks 630 may protrude downward in the first direction from a first side and a second side of the outer skirt part 610 in the third direction to be spaced apart from each other in the third direction.

Each of the outer electrode tab joining part hooks 630 may include a stopper surface 632 and an inclined surface 634.

The stopper surface 632 may block the first outer electrode tab joining part 424 and, in an embodiment, the first outer end 428, to prevent or substantially prevent the first outer electrode tab joining part 424 from moving away from the first terminal 530. In an embodiment, the stopper surface 632 may block the second outer electrode tab joining part 474, and, in an embodiment, the second outer end 478, to prevent or substantially prevent the second outer electrode tab joining part 474 from moving away from the second terminal 540.

The stopper surface 632 may be a plane orthogonal to the first direction. The inclined surface 634 may be a surface inclined with respect to the stopper surface 634. The inclined surface 634 may be inclined away from the first outer electrode tab joining part 424 in the third direction as the inclined surface 634 becomes closer to the electrode assembly 200 in the first direction. In an embodiment, the inclined surface 634 may be inclined away from the second outer electrode tab joining part 474 in the third direction as the inclined surface 634 becomes closer to the electrode assembly 200 in the first direction.

The stopper surface 632 and the inclined surface 634 of the outer electrode tab joining part hook 630 may be located between the first outer end 428 and the electrode assembly 200 or between the second outer end 478 and the electrode assembly 200.

The inner electrode tab joining part hook 640 may pull the first inner electrode tab joining part 422 toward the first terminal 530 or pull the second inner electrode tab joining part 472 toward the second terminal 540. In an embodiment, for example, as illustrated in FIG. 7 and FIG. 11, the inner electrode tab joining part hook 640 may pull the first inner end 426, which is a stepped end of the first inner electrode tab joining part 422, toward the first terminal 530. In an embodiment, the inner electrode tab joining part hook 640 may pull the second inner end 476, which is a stepped end of the second inner electrode tab joining part 472, toward the second terminal 540.

The inner electrode tab joining part hook 640 may be provided as a plurality of inner electrode tab joining part hooks 640. The plurality of inner electrode tab joining part hooks 640 may protrude from the base part 601 of the insulating plate 600A toward the first inner electrode tab joining part 422 or toward the second inner electrode tab joining part 472. For example, the plurality of inner electrode tab joining part hooks 640 may protrude downward in the first direction from the base part 601 to face the outer electrode tab joining part hook 630 with the first current collecting plate 420A interposed therebetween or to face the outer electrode tab joining part hook 630 with the second current collecting plate 470A interposed therebetween.

Each of the inner electrode tab joining part hooks 640 may include a hook head 641 and a spacer 648. The hook head 641 may include a stopper surface 642 and an inclined surface 644.

The stopper surface 642 may block the first inner electrode tab joining part 422, and, in an embodiment, the first inner end 426, to prevent or substantially prevent the first inner electrode tab joining part 422 from moving away from the first terminal 530. In an embodiment, the stopper surface 642 may block the second inner electrode tab joining part 472, and, in an embodiment, the second inner end 476, to prevent or substantially prevent the second inner electrode tab joining part 472 from moving away from the second terminal 540.

The stopper surface 642 may be a plane orthogonal to the first direction. The inclined surface 644 may be a surface inclined with respect to the stopper surface 642. In an embodiment, the inclined surface 644 may be inclined away from the first inner electrode tab joining part 422 in the third direction as the inclined surface 644 becomes closer to the electrode assembly 200 in the first direction. In an embodiment, the inclined surface 644 may be inclined away from the second inner electrode tab joining part 472 in the third direction as the inclined surface 644 becomes closer to the electrode assembly 200 in the first direction.

The spacer 648 is interposed between the base part 601 and the hook head 641 such that the base part 601 and the hook head 641 are spaced apart from each other, and the spacer 648 connects the base part 601 and the hook head 641. The hook head 641 including the stopper surface 642 and the inclined surface 644 may be located between the first inner end 426 and the electrode assembly 200 or between the second inner end 476 and the electrode assembly 200.

After the electrode assembly 200, the electrode tabs 301 and 302, and the connection members 400A and 450A are inserted into the case 100, the cap assembly 500A may be coupled to the case 100 to close the opening 160.

When the cap assembly 500A is lowered in the first direction such that the cap plate 501 is in contact with and supported by an inner surface defining the opening 160, the inclined surface 624 of the current collector joining part hook 620 may slide while in contact with an outer edge of the first current collector joining part 421 or an outer edge of the second current collector joining part 471, the hook head 621 may move downward, and the stopper surface 622 may support and raise the first current collector joining part 421 or the second current collector joining part 471 from below.

Further, the inclined surface 634 of the outer electrode tab joining part hook 630 may slide while in contact with the first outer end 428 or the second outer end 478, the stopper surface 632 may move downward, and the stopper surface 632 may support and raise the first outer electrode tab joining part 424 or the second outer electrode tab joining part 474 from below.

Further, the inclined surface 644 of the inner electrode tab joining part hook 640 may slide while in contact with the first inner end 426 or the second inner end 476, the stopper surface 632 may move downward, and the stopper surface 632 may support and raise the first inner electrode tab joining part 422 or the second inner electrode tab joining part 472 from below.

Therefore, the first current collector boss 412 may come into close contact with the first thin part 533 of the first terminal 530, and the second current collector boss 462 may come into close contact with the second thin part 543 of the second terminal 540. In this state, the first thin part 533 and the second thin part 543 are irradiated with laser light from the outside of the secondary battery 2, and, thus, the first terminal 530 may be welded to the first current collector 410, and the second terminal 540 may be welded to the second current collector 460.

The cap assembly 500A illustrated in FIGS. 4 and 6, which includes the connection member towing part, may be provided with the current collector joining part hook 620, the outer electrode tab joining part hook 630, and the inner electrode tab joining part hook 640, but, in another embodiment of the present invention, the cap assembly 500A may be provided with some of the three types of hooks 620, 630, and 640.

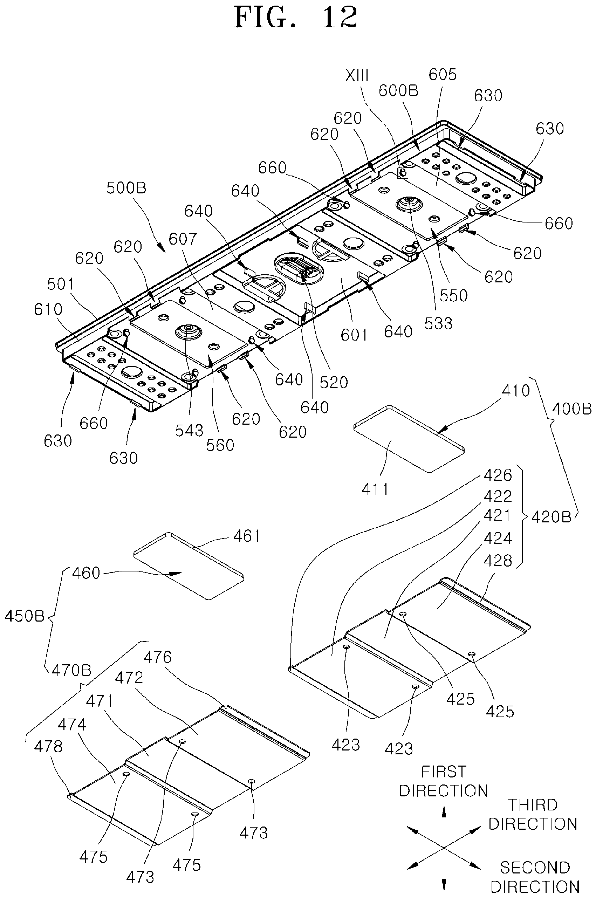

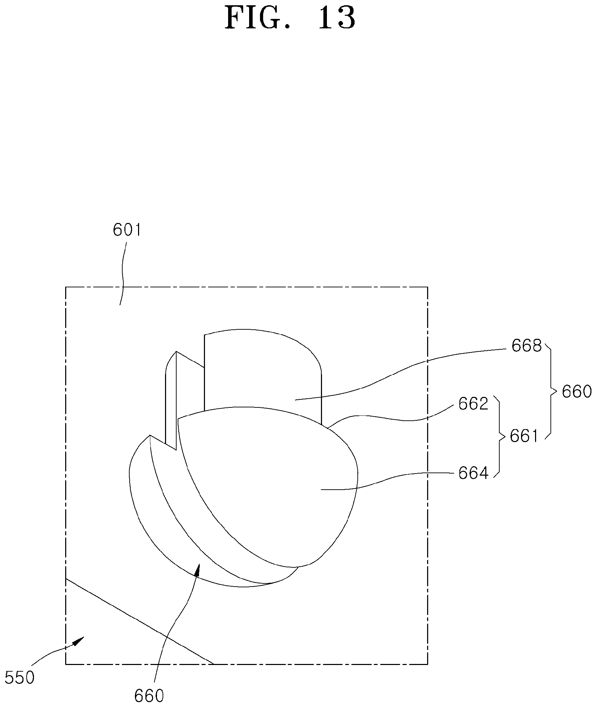

FIG. 12 is a perspective view illustrating a cap assembly and a connection member included in a secondary battery according to another embodiment of the present invention from below; and FIG. 13 is an enlarged view illustrating a region "XIII" of FIG. 12. Like the secondary battery 2 described with reference to FIGS. 1 to 11, a secondary battery according to another embodiment of the present invention may include the case 100, the electrode assembly 200, the electrode tabs 301 and 302, connection members 400B and 450B, and a cap assembly 500B.

The case 100, the electrode assembly 200, and the electrode tabs 301 and 302 included in the secondary battery according to another embodiment of the present invention may be the same as the corresponding components in the secondary battery 2 described with reference to FIGS. 1 to 11, and, thus, a duplicated description thereof may be omitted.

Referring to FIGS. 12 and 13, the connection members 400B and 450B may include the first connection member 400B and the second connection member 450B.

The first connection member 400B may include the first current collector 410 and a first current collecting plate 420B. The first current collector 410 may include the first current collector body 411 and the first current collector boss 412. The first current collecting plate 420B may include the first current collector joining part 421, the first inner electrode tab joining part 422, the first outer electrode tab joining part 424, the first inner end 426, and the first outer end 428.

The first connection member 400B is the same as the first connection member 400A included in the secondary battery 2 according to the previously described embodiment of the present invention except that a hook through-hole 423 is formed on a side of the first inner electrode tab joining part 422 close to the first current collector joining part 421 and a hook through-hole 425 is formed on a side of the first outer electrode tab joining part 424 close to the first current collector joining part 421. The first electrode tab 301 may be welded to the first current collecting plate 420B while avoiding an area in which the hook through-holes 423 and 425 are formed.

The second connection member 450B may include the second current collector 460 and a second current collecting plate 470B. The second current collector 460 may include the second current collector body 461 and the second current collector boss 462. The second current collecting plate 470B may include the second current collector joining part 471, the second inner electrode tab joining part 472, the second outer electrode tab joining part 474, the second inner end 476, and the second outer end 478.

The second connection member 450B is the same as the second connection member 450A included in the secondary battery 2 according to the previously described embodiment of the present invention except that a hook through-hole 473 is formed on a side of the second inner electrode tab joining part 472 close to the second current collector joining part 471 and a hook through-hole 475 is formed on a side of the second outer electrode tab joining part 474 close to the second current collector joining part 471. The second electrode tab 302 may be welded to the second current collecting plate 470B while avoiding an area in which the hook through-holes 473 and 475 are formed.

The cap assembly 500B may include the cap plate 501, the terminals 530 and 540, the gaskets 550 and 560, an insulating plate 600B, and the connection member towing part. The connection member towing part may be connected to or included in the insulating plate 600B. The connection member towing part may include the current collector joining part hook 620, the outer electrode tab joining part hook 630, the inner electrode tab joining part hook 640, and a current collecting plate through-hook 660.

The terminals 530 and 540, the gaskets 550 and 560, the current collector joining part hook 620, the outer electrode tab joining part hook 630, and the inner electrode tab joining part hook 640 included in the cap assembly 500B may be the same as the corresponding components in the cap assembly 500A of the secondary battery 2 according to the previously described embodiment of the present invention, and, thus, a duplicated description thereof may be omitted.

The insulating plate 600B is the same as the insulating plate 600A included in the cap assembly 500A of the secondary battery 2 according to the previously described embodiment of the present invention except that the insulating plate 600B further includes the current collecting plate through-hook 660. Thus, a duplicated description thereof will be omitted below, and the current collecting plate through-hook 600 will be mainly described.

The current collecting plate through-hook 660 may be provided as a plurality of current collecting plate through-hooks 660. The plurality of current collecting plate through-hooks 660 may pass through and be in contact with the first current collecting plate 420B to pull the first current collecting plate 420B toward the first terminal 530 or pass through and be in contact with the second current collecting plate 470B to pull the second current collecting plate 470B toward the second terminal 540.

In an embodiment, the current collecting plate through-hook 660 may protrude toward the electrode assembly 200 in the first direction to pass through the hook through-holes 423 and 425 of the first electrode tab joining parts 422 and 424 in the first gasket contact portion 605 of the insulating plate 600B. In a non-limiting embodiment, the current collecting plate through-hook 660 may protrude toward the electrode assembly 200 in the first direction to pass through the hook through-holes 473 and 475 of the second electrode tab joining parts 472 and 474 in the second gasket contact portion 607 of the insulating plate 600B.

Each of the current collecting plate through-hooks 660 may include a hook head 661 and a spacer 668. The hook head 661 may include a stopper surface 662 and an inclined surface 664.

The stopper surface 662 may block the first electrode tab joining parts 422 and 424 to prevent or substantially prevent the first current collector joining part 421 and the first electrode tab joining parts 422 and 424 from moving away from the first terminal 530 or block the second electrode tab joining parts 472 and 474 to prevent or substantially prevent the second current collector joining part 471 and the second electrode tab joining parts 472 and 474 from moving away from the second terminal 540.

The stopper surface 662 may be a plane orthogonal to the first direction. The inclined surface 664 may be a surface inclined with respect to the stopper surface 662. The inclined surface 664 may be a curved surface.

In a non-limiting embodiment, the spacer 668 may be interposed between the first gasket contact portion 605 and the hook head 661 such that the first gasket contact portion 605 and the hook head 661 are spaced apart from each other and may connect the first gasket contact portion 605 and the hook head 661. In a non-limiting embodiment, the spacer 668 may be interposed between the second gasket contact portion 607 and the hook head 661 such that the second gasket contact portion 607 and the hook head 661 are spaced apart from each other and may connect the second gasket contact portion 607 and the hook head 661.

The hook head 661 including the stopper surface 662 and the inclined surface 664 may be located between the first electrode tab joining parts 422 and 424 and the electrode assembly 200 or located between the second electrode tab joining parts 472 and 474 and the electrode assembly 200 inside the case 100.

When the cap assembly 500B is lowered in the first direction such that the cap plate 501 comes into contact with and is supported by an inner surface defining the opening 160 (see FIG. 2), the inclined surface 664 of the current collecting plate through-hook 660 may slide while in contact with inner edges of the hook through-holes 423 and 425 of the first electrode tab joining parts 422 and 424 or inner edges of the hook through-holes 473 and 475 of the second electrode tab joining parts 472 and 474, the hook head 661 may move downward, and, thus, the stopper surface 662 may support and raise the first current collector joining part 421 or the second current collector joining part 471 from below.

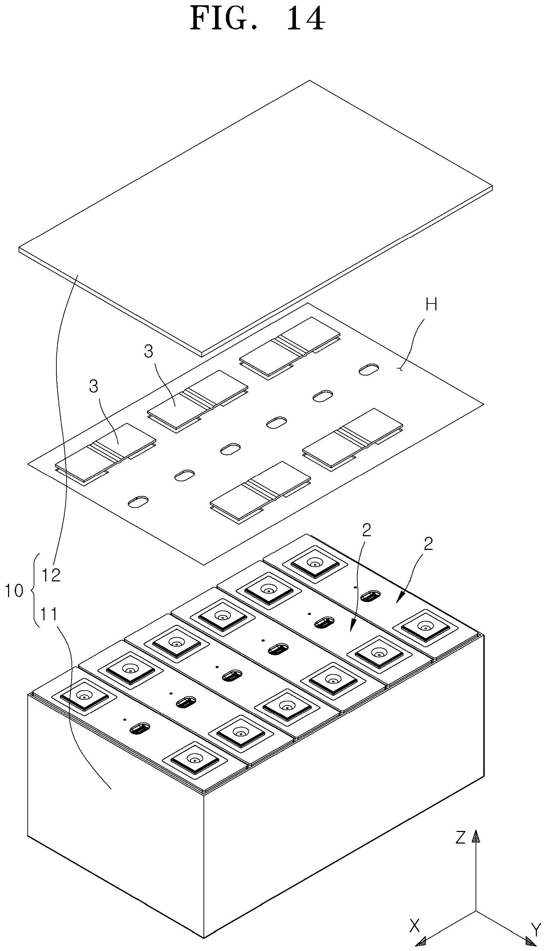

FIG. 14 is a schematic perspective view illustrating a configuration of a battery pack according to an embodiment of the present invention.

Referring to FIG. 14, a battery pack according to an embodiment of the present invention may include a housing 10, the secondary battery 2, and a busbar 3.

The housing 10 may form a schematic exterior of the battery pack and provide a space in which the secondary battery 2 may be accommodated.

The housing 10 according to the present embodiment may include a housing body 11 and a cover 12. The housing body 11 may be formed to have a shape of a box having an empty interior and an open side. However, a cross-sectional shape of the housing body 11 is not limited to a quadrangular shape, as illustrated in FIG. 14, and may be designed to have any of various shapes, such as a polygonal shape, a circular shape, and an oval shape.

The cover 12 may be connected to the housing body 11 and close an internal space of the housing body 11. As an example, the cover 12 may be formed to have a generally plate shape and disposed to face the open side of the housing body 11. The cover 12 may be fixed to the housing body 11 by any of various types of coupling methods, such as bolting, welding, and press-fitting.

The secondary battery 2 may function as a unit structure that stores and supplies electric power in the battery pack.

The secondary battery 2 may be provided as a plurality of secondary batteries 2. The plurality of secondary batteries 2 may be arranged in two or more columns in at least one of a longitudinal direction (X-axis direction based on FIG. 14) or a width direction (Y-axis direction based on FIG. 14) of the housing 10. FIG. 14 illustratively illustrates that the plurality of secondary batteries 2 are arranged in six columns in the longitudinal direction of the housing 10, but an arrangement form of the plurality of secondary batteries 2 is not limited thereto and may be designed in various forms. The plurality of secondary batteries 2 may be arranged in parallel or substantially in parallel with each other. The number of secondary batteries 2 may be variously changed depending on a size, a shape, and the like of the housing 10.

The first terminal 530 of one of a pair of adjacent secondary batteries 2 and the second terminal 540 of the other may be arranged to face each other in the longitudinal direction of the housing 10. That is, the front surface part 120 of one of the adjacent secondary batteries 2 may be disposed to face the rear surface part 130 of the other.

The plurality of secondary batteries 2 may be electrically connected by the busbar 3.

The busbar 3 according to the present embodiment may be disposed between the cover 12 and the secondary battery 2. The busbar 3 may be provided as a plurality of busbars 3. Each of the busbars 3 may connect the pair of adjacent secondary batteries 2 to each other in series or parallel.

As a non-limiting example, both, or opposite, sides of the busbar 3 may be connected to the first terminal 530 (see FIG. 1) of one of the pair of adjacent secondary batteries 2 and the second terminal 540 (see FIG, 1) of the other. Accordingly, the plurality of secondary batteries 2 may be connected to each other in series by the busbar 3.

However, the busbar 3 is not limited to this connection form, and both, or opposite, sides of the busbar 3 may be connected to the first terminal 530 of one of the pair of adjacent secondary batteries 2 and the second terminal 540 of the other or connected to the second terminal 540 of the one of the pair of adjacent secondary batteries 2 and the second terminal 540 of the other.

The busbar 3 may be formed of an electrically conductive material, such as copper, aluminum, or nickel. However, a shape of the busbar 3 is not limited to that illustrated in FIG. 14 and may be designed in various shapes that may electrically connect the adjacent secondary batteries 2.

The plurality of busbars 3 may be supported inside the housing 10 by a busbar holder H.

The busbar holder H according to the present embodiment may be formed to have the shape of a flat plate. The busbar holder H may be disposed between the cover 12 and the secondary battery 2. The busbar 3 may be fixed to the busbar holder H by any of various types of coupling methods, such as press-fitting, bolting, and injection coupling. In an embodiment, the busbar holder H may include an electrically insulating polymer compound material.

According to embodiments of the present invention, when a cap assembly closes an opening of a case, a connection member towing part included in the cap assembly pulls a connection member such that the connection member comes into close contact with a terminal. Accordingly, the terminal and the connection member of a secondary battery can be firmly welded.

According to embodiments of the present invention, welding quality and a joining force between a terminal and a connection member of a secondary battery can be improved, and accidents such as overheating and fire during charging and discharging of the secondary battery can be prevented or substantially prevented.

However, aspects and features of the present invention are not limited to those described above and other aspects and features not mentioned will be clearly understood by those skilled in the art from the detailed description provided above.

Although the present invention has been described with reference to some embodiments and drawings illustrating aspects thereof, the present invention is not limited thereto. Various modifications and variations can be made by a person skilled in the art to which the present invention belongs within the scope of the technical spirit of the invention and the claims and equivalents thereto.

## Claims

1. A secondary battery (2) comprising:
a case (100) having an opening (160);
an electrode assembly (200) accommodated inside the case (100);
an electrode tab (301, 302) connected to the electrode assembly (200);
a connection member (400A, 400B, 450A, 450B) electrically connected to the electrode tab (301, 302); and
a cap assembly (500A, 500B) comprising a cap plate (501) configured to close the opening (160), a terminal (530, 540) coupled to the cap plate (501), and a connection member (400A, 400B, 450A, 450B) towing part configured to pull the connection member (400A, 400B, 450A, 450B) such that the connection member (400A, 400B, 450A, 450B) comes into contact with the terminal (530, 540).

2. The secondary battery (2) as claimed in claim 1, wherein the connection member (400A, 400B, 450A, 450B) comprises a current collector electrically coupled to the terminal (530, 540) and a current collecting plate electrically coupled to the current collector, and
the connection member (400A, 400B, 450A, 450B) towing part is configured to pull the current collecting plate toward the terminal (530, 540) while in contact with the current collecting plate.

3. The secondary battery (2) as claimed in claim 2, wherein the current collecting plate comprises a current collector joining part joined to the current collector, and an electrode tab (301, 302) joining part connected to the current collector joining part and joined to the electrode tab (301, 302), and
the connection member (400A, 400B, 450A, 450B) towing part comprises a current collector joining part hook (620) configured to pull the current collector joining part toward the terminal (530, 540).

4. The secondary battery (2) as claimed in claim 3, wherein the current collector joining part and the current collector are in surface (634) contact with each other, and
the current collector joining part hook (620) is configured to pull the current collector joining part while in contact with an outer peripheral portion of the current collector joining part not overlapping the current collector.

5. The secondary battery (2) as claimed in claim 3, wherein the cap assembly (500A, 500B) further comprises an insulation plate between the cap plate (501) and the electrode assembly (200), coupled to the cap plate (501), and comprising an insulation material, and
the current collector joining part hook (620) is connected to the insulation plate.

6. The secondary battery (2) as claimed in claim 3, wherein the current collector joining part hook (620) comprises a stopper surface (622, 632, 642, 662) configured to block the current collector joining part to prevent the current collector joining part from moving away from the terminal (530, 540), and an inclined surface (624, 644, 664) inclined with respect to the stopper surface (622, 632, 642, 662).

7. The secondary battery (2) as claimed in claim 6, wherein the stopper surface (622, 632, 642, 662) and the inclined surface (624, 644, 664) are located between the current collector joining part and the electrode assembly (200).

8. The secondary battery (2) as claimed in claims 2 to 7, wherein the current collecting plate comprises a current collector joining part joined to the current collector and an electrode tab (301, 302) joining part connected to the current collector joining part and joined to the electrode tab (301, 302), and
the connection member (400A, 400B, 450A, 450B) towing part comprises an electrode tab (301, 302) joining part hook configured to pull the electrode tab (301, 302) joining part toward the terminal (530, 540).

9. The secondary battery (2) as claimed in claim 8, wherein the cap assembly (500A, 500B) further comprises an insulation plate between the cap plate (501) and the electrode assembly (200), coupled to the cap plate (501), and comprising an insulation material, and
the electrode tab (301, 302) joining part hook is connected to the insulation plate.

10. The secondary battery (2) as claimed in claim 8, wherein the electrode tab (301, 302) joining part is provided as a pair of electrode tab (301, 302) joining parts,
the pair of electrode tab (301, 302) joining parts protrude from the current collector joining part in opposite directions,
the electrode tab (301, 302) joining part hook is provided as a plurality of electrode tab (301, 302) joining part hooks, and
at least some of the plurality of electrode tab (301, 302) joining part hooks are configured to pull ends of the pair of electrode tab (301, 302) joining parts in a longitudinal direction toward the terminal (530, 540).

11. The secondary battery (2) as claimed in claims 2 to 10, wherein the connection member (400A, 400B, 450A, 450B) towing part comprises a current collecting plate through-hook (600, 660) configured to pull the current collecting plate toward the terminal (530, 540) while passing through and in contact with the current collecting plate.

12. The secondary battery (2) as claimed in claim 11, wherein the cap assembly (500A, 500B) further comprises an insulation plate between the cap plate (501) and the electrode assembly (200), coupled to the cap plate (501), and comprising an insulation material,
the current collecting plate comprises a current collector joining part joined to the current collector, and an electrode tab (301, 302) joining part connected to the current collector joining part and joined to the electrode tab (301, 302), and
the current collecting plate through-hook (600, 660) is connected to the insulation plate and passes through the electrode tab (301, 302) joining part.

13. The secondary battery (2) as claimed in claims 2 to 12, wherein the current collector is welded to the current collecting plate and the terminal (530, 540), and
the current collector comprises a current collector body welded to the current collecting plate, and a current collector boss welded to the terminal (530, 540) and protruding from the current collector body toward the terminal (530, 540).

14. The secondary battery (2) as claimed in claims 1 to 13, wherein the terminal (530, 540) is provided as a pair of terminals (530, 540), and
the pair of terminals (530, 540) are coupled to opposite ends of the cap plate (501) in a longitudinal direction.

15. A battery pack comprising:
a housing (10); and
a plurality of secondary batteries arranged inside the housing (10),
wherein each of the secondary batteries comprises:
a case (100) having an opening (160);
an electrode assembly (200) accommodated inside the case (100);
an electrode tab (301, 302) connected to the electrode assembly (200);
a connection member (400A, 400B, 450A, 450B) electrically connected to the electrode tab (301, 302); and
a cap assembly (500A, 500B) comprising a cap plate (501) configured to close the opening (160), a terminal (530, 540) coupled to the cap plate (501), and a connection member (400A, 400B, 450A, 450B) towing part configured to pull the connection member (400A, 400B, 450A, 450B) such that the connection member (400A, 400B, 450A, 450B) comes into contact with the terminal (530, 540).
